# EUROPÄISCHE PATENTSCHRIFT

(11) **EP 3 982 027 B1**
(45) Veröffentlichungstag und Bekanntmachung des Hinweises auf die Patenterteilung: **15.11.2023**
(21) Anmeldenummer: 21195795.6
(22) Anmeldetag: 09.09.2021
(51) Int. Cl.: F16L 37/088, F01N 13/00

(54) **STECKVERBINDER MIT RÜCKSTELLELEMENT**
CONNECTOR WITH RETURN ELEMENT
CONNECTEUR ENFICHABLE POURVU D'ÉLÉMENT DE RAPPEL

(30) Priorität: 09.10.2020 DE 102020126507
(43) Veröffentlichungstag der Anmeldung: 13.04.2022
(73) Patentinhaber: Voss Automotive GmbH, 51688 Wipperfürth (DE)
(72) Erfinder: OBERDÖRFER, Alexander, 42477 Radevormwald (DE); SACHSE, Martin, 51688 Wipperfürth (DE); AHOURI, Mustapha, 58507 Lüdenscheid (DE)
(74) Vertreter: Dr. Solf & Zapf Patent- und Rechtsanwalts PartG mbB

(56) Entgegenhaltungen:
- WO-A1-2016/038226
- DE-U1-202007 013 316
- US-A- 4 781 400
- US-A1- 2017 114 935

## Beschreibung

Die Erfindung betrifft einen Steckverbinder zur Herstellung von Schlauch- und/oder Rohrverbindungen gemäß dem Oberbegriff des Anspruchs 1.

Aus der US 4 781 400 A ist ein Steckverbinder mit einem Kupplungsteil bekannt. Dabei ist in einer Aufnahmeöffnung des Kupplungsteils ein Rohrelement angeordnet, welches als ein Dichtelement wirkend ein Steckerteil zum Kupplungsteil abdichtet. Weiterhin weist der Steckverbinder ein Rückstellelement auf, welches auf das Steckerteil eine Rückstellkraft in Einsteckrichtung ausüben kann und sich unmittelbar an dem Kupplungsteil abstützt.

Ein weiterer Steckverbinder mit einem Kupplungsteil ist aus der US 2017/114935 A1 bekannt. Dieser Steckverbinder weist eine Sicherungskappe auf, welche einen Ringbund eines in eine Aufnahmeöffnung des Kupplungsteils eingesteckten Steckverbinder gegen die Einsteckrichtung blockieren kann.

Die WO 2016/038226 A1 offenbart einen Steckverbinder mit einem Kupplungsteil. Dabei weist der Steckverbinder ein federgelagertes Verriegelungselement auf, welches eine Rückstellkraft in Einsteckrichtung auf ein eingestecktes Steckerteil ausüben kann.

Aus der DE 20 2007 013316 U1 ist bekannt, dass ein Leitungsende einer Rohrleitung in eine Anschlussvorrichtung eingesteckt werden kann. Dabei ist die Anschlussvorrichtung als eine Überwurfschraube oder als ein Gehäuseteil ausgebildet. Weiterhin ist ein Halteteil in einer Aufnahmeöffnung der Anschlussvorrichtung angeordnet, wobei ein Federelement eine Kraft in Einsteckrichtung auf das Halteteil ausüben kann.

Steckverbinder ähnlicher Art sind unter anderem als "VOSS Stecksystem 241" auf dem Markt befindlich und insbesondere unter den Namen "SV241N / NSL" bekannt. Dabei wird, meist in einem Vormontageprozess, das Halteteil in eine Aufnahmeöffnung des Kupplungsteils gesteckt. Nach der Montage, d. h. nach dem Einstecken des zu montierenden Steckerteils in den Einsteckkanal, blockiert das Halteteil zumindest formschlüssig ein Trennen des Steckerteils entgegen der Einsteckrichtung aus dem Einsteckkanal des Kupplungsteils.

Bei dem Steckerteil kann es sich insbesondere um einen nach der Norm SAE J 2044 ausgebildeten, so genannten Male-Stecker handeln. Dabei greift das Halteteil hinter einen in der SAE-Steckerkontur ausgebildeten Ringbund und blockiert diesen formschlüssig entgegen der Einsteckrichtung.

Derartige Systeme werden unter anderem in der Kraftfahrzeugtechnik verwendet. Insbesondere ist der Einsatz dieser Systeme für Kraftstoffsysteme und "Selective catalytic reduction", nachfolgend SCR-Systeme genannt, zur Reduktion von Stickoxiden in Abgasen geeignet.

SCR-Systeme können in bekannter Art sowohl beheizt als auch unbeheizt ausgeführt werden. In den Leitungen von SCR-Systemen wird in der Regel eine 32,5- prozentige wässrige Harnstofflösung geführt, auch als AdBlue bekannt. Die Zusammensetzung ist in der DIN 70070 bzw. ISO 22241-1 geregelt. Dabei ist es allgemein bekannt, dass besagte wässrige Harnstofflösungen bei Temperaturen im Bereich von -8 °C bis -11 °C gefrieren und sich dabei ausdehnen. Dies kann zu einem Versagen des Stecksystems führen.

Bei Steckverbindern derartiger Systeme kann ein Spalt zwischen einem in Einsteckrichtung gesehen hintersten Ende des Steckerteils und einer diesem Ende gegenüberliegenden Wandung des Kupplungsteils entstehen oder für die Montage vorteilhaft sein. Der Spalt wird auch als Übersteckraum bezeichnet. Dieser Spalt ist im Betrieb mit dem Medium des Fluidsystems gefüllt, insbesondere mit der flüssigen Harnstofflösung. Bei hohen Betriebsdrücken bzw. wenn das Medium gefriert, wirkt eine Kraft entgegen der Einsteckrichtung auf das Ende des Steckerteils und verschiebt diesen dadurch entgegen der Einsteckrichtung. Hierbei wird das Steckerteil mit seinem Ringbund gegen das Halteteil gepresst, welches wiederum die Kraft auf den Aufnahmekörper überträgt. Insbesondere bei kalten Temperaturen ist die Elastizität des Kupplungsteils nur in einem reduzierten Ausmaß gegeben, so dass die auf den Aufnahmekörper übertragene Kraft den elastischen Bereich des Aufnahmekörpers übersteigt. Insbesondere plastische Verformungen und Materialversagen sind eine mögliche Folge, wenn der elastische Bereich überschritten wird.

Aus der WO 2015/135663 ist ein Steckverbinder mit einer Lösung zur Vermeidung derartiger Beschädigungen bekannt. Gemäß dieser Lösung wird der Übersteckraum so klein wie möglich gehalten, um die Menge des potenziell gefrierbaren Mediums im Übersteckraum auf ein Minimum zu reduzieren. Eine geringere Menge des Mediums hat eine geringere Volumenausdehnung beim Gefrieren zur Folge und verringert dadurch die Druckbelastung auf den Steckverbinder. Der gattungsgemäße Steckverbinder sieht vor, ein Rückstellelement in Form eines elastischen Elements im Innern des Einsteckkanals anzuordnen. Dieses elastische Element drückt gegen einen Ringbund des Steckerteils und übt dadurch eine Rückstellkraft in Einsteckrichtung auf das Steckerteil aus. Das Steckerteil wird mittels des elastischen Elements zumindest bei einem hohen System- oder Eisdruck in Einsteckrichtung gedrängt und der Übersteckraum als Folge daraus möglichst klein gehalten.

Das bekannte elastische Element ist dabei insbesondere in Form eines Gummielements oder eines beliebigen Elastomers ausgebildet. Weiterhin wird das elastische Element in einem im Durchmesser reduzierten Abschnitt des Steckerteils angeordnet. Das elastische Element stützt sich radial an dem im Durchmesser reduzierten Abschnitt des Steckerteils und axial in Einsteckrichtung an dem Ringbund des Steckerteils und entgegen der Einsteckrichtung an einem Stützring ab. Dabei ist der Stützring zwischen dem Halteteil und dem elastischen Element angeordnet.

Das bekannte Rückstellelement hat sich in der Praxis als vorteilhaft gegen aufkommende Eisdrücke bewiesen, allerdings besteht Verbesserungspotenzial hinsichtlich der Montage, Anzahl der Elemente, der Wirkverbindung, welche zwischen Halteteil und Rückstellelement besteht, und der Verwendungsmöglichkeiten bei Steckerteilen ohne einen im Durchmesser reduzierten Abschnitt, welcher eine Schwächungsstelle am Steckerteil darstellt.

Aus der DE 10 2016 109 051 A1 und der EP 3 270 028 A2 sind zudem Steckverbinder bekannt, welche sich, insbesondere durch die konstruktive Ausbildung des Halteteils als eine Halteklammer mit zwei Paaren von Federarmen, ebenfalls in der Praxis vorteilhaft bewährt haben. Dabei ist die bekannte Halteklammer besonders für die Montage und Einbausicherheit von großem Vorteil.

Der Erfindung liegt die Aufgabe zugrunde, die Nachteile des gattungsgemäßen Steckverbinders, insbesondere im Hinblick auf die Montage, die Anzahl der Komponenten und Einsetzbarkeit bei universellen Steckerteilen, zu verbessern, bevorzugt unter Beibehaltung einer zumindest gleichwertigen, insbesondere besseren Funktion betreffend die Halteklammer.

Die Aufgabe wird erfindungsgemäß durch die Merkmale des Anspruchs 1 gelöst. Dadurch, dass sich das Rückstellelement unmittelbar axial und radial an dem Kupplungsteil abstützt, wird vorteilhaft das Rückstellelement von dem Halteteil entkoppelt. Dabei hat das Kupplungsteil erfindungsgemäß in einer Innenwandung des Einsteckkanals zumindest eine Führungsnut zur Führung zumindest eines Teils des Rückstellelements ausgebildet. Dabei ist die Führungsnut zumindest einseitig entgegen der Einsteckrichtung frontseitig des Kupplungsteils geöffnet ausgebildet und erstreckt sich in Einsteckrichtung. Das Halteteil steht dadurch nicht mehr unter einer entgegen der Einsteckrichtung wirkenden Vorspannung, was insbesondere ein Überführen von der Riegelstellung in eine andere Stellung, insbesondere eine Löse- und/oder Vormontagestellung, bzw. die entsprechende Rücküberführung in die Riegelstellung vereinfacht.

Weiterhin hat die Entkopplung des Halteteils von dem Rückstellelement die Folge, dass die Notwendigkeit eines Stützrings, welcher das Rückstellelement gegen das Halteteil verspannt, entfällt.

Das Steckerteil ist mit einem axialen Steckspiel in Einsteckrichtung auf Grund des Übersteckraums in dem Einsteckkanal montierbar. Das Steckspiel ist begrenzt durch einen in Einsteckrichtung betrachtet hinteren Anschlag für einen Ringbund des Steckerteils im Einsteckkanal und das in Einsteckrichtung betrachtet vor dem hinteren Anschlag angeordnete Halteteil in Riegelstellung. Auf das Halteteil wirkt erfindungsgemäß vorteilhaft erst dann eine entgegen der Einsteckrichtung wirkende Kraft, wenn das Steckerteil entgegen der Einsteckrichtung bis zu einem Anlagekontakt mit dem Halteteil verschoben wurde. Dadurch wird vorteilhaft der Werkstoff des Halteteils geschont.

Weiterhin ermöglicht das Rückstellelement in bekannter Weise durch die elastische Verformung des Rückstellelements eine Vergrößerung des Übersteckraums bei einer Volumenausdehnung eines im Übersteckraum gefrierenden Mediums. Durch die Vergrößerung des Übersteckraums wird der auf das Kupplungsteil wirkende Druck verringert.

Weiterhin hat die Entkopplung des Halteteils von dem Rückstellelement die Folge, dass ein Stützring, welcher das Rückstellelement gegen das Halteteil verspannen würde, entfällt.

Eine weitere vorteilhafte Wirkung der erfindungsgemäßen Ausführung ist, dass insbesondere die Notwendigkeit eines speziellen Male-Steckers mit einer im Durchmesser reduzierten Aufnahme für das Rückstellelement entfällt. Vorteilhaft wird der Anfertigungsaufwand und Lagerbedarf von speziellen Steckerteilen reduziert.

Gemäß einer vorteilhaften Ausführung der Erfindung ist das Rückstellelement in Einsteckrichtung betrachtet frontseitig an einer Stirnwand des Kupplungsteils angeordnet. Von dort erstreckt sich das Rückstellelement zumindest teilweise mit einer elastisch verformbaren Federlasche in Einsteckrichtung in den Einsteckkanal. Vorteilhaft wird dabei der Bauraumbedarf zur Wahrung der Rückstellfunktion innerhalb des Einsteckkanals reduziert.

Zweckmäßig kann ein im Einsteckkanal angeordnetes freies Ende der Federlasche einen Kontaktarm aufweisen. Dieser erstreckt sich vorteilhaft in Einsteckrichtung und schließt zu einer zentralen Strömungsachse des Einsteckkanals einen Kontaktwinkel im Bereich von größer 0° bis 90° ein. Der Kontaktarm ist insbesondere zur Kontaktierung eines Ringbunds des Steckerteils ausgebildet, wobei durch den Kontaktwinkel auch bei einer elastischen Verformung des Rückstellelements bzw. der Federlasche stets der Kontakt zum Ringbund gewährleistet ist.

Vorteilhaft weist die Federlasche neben dem Kontaktarm auch einen Verbindungsarm auf. Der Verbindungsarm erstreckt sich entgegen der Einsteckrichtung in einem Winkel zur zentralen Strömungsachse. Dabei ist der Verbindungsarm insbesondere derart abgewinkelt ausgebildet, dass er mit der zentralen Strömungsachse mit dem Winkel einen Bereich von größer 0° bis 90° einschließt. Bevorzugt geht der Verbindungsarm insbesondere unmittelbar in den Kontaktarm über, so dass der Kontaktarm und der Verbindungsarm V-förmig zueinander angeordnet sind. Das hat die vorteilhafte Wirkung, dass die Federlasche länger und dadurch elastischer ausgebildet ist, wobei der tatsächliche Bauraumbedarf in Einsteckrichtung geringer ist als die Länge der einzelnen Arme. Weiterhin ermöglicht die V-Form ein einfacheres Einführen des Steckerteils in Einsteckrichtung in den Einsteckkanal.

Es hat sich zudem als nützlich erwiesen, dass das Rückstellelement zumindest eine zumindest teilweise in Einsteckrichtung weisende Befestigungslasche aufweisen kann. Vorteilhaft ist die Befestigungslasche in mindestens eine zweckmäßig am äußeren Umfang des Kupplungsteils korrespondierend angeordnete und ausgebildete Rippe einhakbar, einrastbar oder einclipsbar ausgebildet. Entsprechend der Federlasche wird durch die äußere Befestigung des Rückstellelements der Bauraumbedarf innerhalb des Einsteckkanals gering gehalten. Weiterhin ist die Montage vereinfacht, da die Verbindung leicht für einen Anwender optisch erkennbar, herstellbar, einstellbar und kontrollierbar ist.

In einer weiteren Ausführung der Erfindung ist das Rückstellelement vorteilhaft als Federklammer ausgebildet. Diese ist insbesondere ringförmig ausgebildet und umschließt derartig den Einsteckkanal, dass das zu montierende Steckerteil in Einsteckrichtung durch eine Durchführöffnung der Federklammer hindurch in den Einsteckkanal einführbar ist. Zweckmäßig hat die Federklammer dabei vorteilhaft zwei, insbesondere zur Durchführöffnung gegenüberliegend ausgebildete, Federlaschen und bevorzugt zwei, ebenfalls bevorzugt zur Durchführöffnung gegenüberliegend ausgebildete, Befestigungslaschen ausgebildet, wobei die Federlaschen und die Befestigungslaschen insbesondere jeweils um 90° um die Durchführöffnung versetzt zueinander beabstandet angeordnet sind.

Es hat sich dabei als vorteilhaft erwiesen, dass die Federklammer jeweils zwei Federlaschen und/oder zwei Befestigungslaschen aufweist, um sowohl die vorteilhafte Rückstellkraft zu generieren, als auch um sich im erforderlichen Umfang am Kupplungsteil abzustützen. Zudem ermöglicht die gleichmäßige Verteilung der Federlaschen zueinander und der Befestigungslaschen zueinander, dass die jeweiligen Kräfte gleichmäßig übertragen und die Gefahr eines Verkeilens bzw. Verdrehens des Rückstellelements und/oder des Steckerteils verringert werden.

Sofern eine Anpassung an die Einsatzbedingungen erforderlich ist, kann das Rückstellelement, insbesondere die Federklammer, auch weniger oder mehr als zwei Federlaschen und/oder Befestigungslaschen aufweisen.

Vorzugsweise hat das Kupplungsteil in der Stirnwand eine den Einsteckkanal umschließende Auflagenut zur Lagerung des Rückstellelements ausgebildet. Zweckmäßig sind das Rückstellelement und die Auflagenut derart korrespondierend zueinander ausgebildet, dass das Rückstellelement gegen ein Verschieben senkrecht zur Einsteckrichtung und gegen ein Rotieren um den Einsteckkanal in der Auflagenut gelagert ist. Neben der Sicherung der funktionsgewährleistenden Position und Ausrichtung des Rückstellelements hat die Auflagenut den Vorteil, dass das Rückstellelement zumindest teilweise in Einsteckrichtung in der Stirnwand des Kupplungsteils versenkt angeordnet ist. Dadurch wird eine Angriffsfläche für äußere Einflüsse verringert und die Montage bei möglichst kleinem radialen Bauraum vereinfacht. Insbesondere ist mittels der Auflagenut eine Fehlmontage praktisch nicht möglich.

Vorzugsweise ist das Rückstellelement aus Federstahl ausgebildet. Diese Ausführung hat gegenüber einem Rückstellelement aus einem Gummiwerkstoff bzw. einem elastomeren Werkstoff den Vorteil einer höheren Resistenz gegenüber Temperaturschwankungen.

Um die Herstellung und Montage weiterhin zu vereinfachen, kann das Kupplungsteil gemäß einer vorteilhaften Ausführung zweiteilig, aus einem Grundkörper und einem Aufnahmekörper, ausgebildet sein. Der Aufnahmekörper ist insbesondere reversibel oder irreversibel mit dem Grundkörper verbindbar. Vorteilhaft hat sich eine kraft- und/oder form- oder stoffschlüssige Verbindung auf Grund der jeweiligen bekannten Verbindungseigenschaften in Abhängigkeit von dem Verwendungszweck bzw. Verwendungsbedingung erwiesen.

Ebenfalls vorteilhaft für die Herstellung sind das Kupplungsteil oder der Aufnahmekörper und/oder der Grundkörper jeweils monolithisch im Spritzgussverfahren hergestellt ausgebildet.

Weitere vorteilhafte Ausgestaltungen der Erfindung ergeben sich aus der folgenden Figurenbeschreibung und den abhängigen Unteransprüchen.

Es zeigen:
- Fig. 1: eine Explosionsansicht einer Ausführung eines erfindungsgemäßen Steckverbinders,
- Fig. 2: eine perspektivische Ansicht einer ersten Ausführungsform eines erfindungsgemäßen Rückstellelements,
- Fig. 3: eine perspektivische Ansicht eines Aufnahmekörpers einer mehrteiligen Ausführung eines Kupplungsteils,
- Fig. 4: eine Aufsicht in eine Einsteckrichtung auf eine Ausführung eines erfindungsgemäßen Steckverbinders mit einem in Einsteckrichtung eingeführten schematisch dargestellten Steckverbinder,
- Fig. 5: eine perspektivische Schnittansicht auf eine Schnittfläche A - A gemäß Figur 4,
- Fig. 6: eine Schnittansicht entlang B - B gemäß Figur 5 in einem Ruhezustand,
- Fig. 7: eine Detailansicht des Bereichs C der Schnittansicht gemäß Figur 6,
- Fig. 8: eine Schnittansicht entlang B - B gemäß Figur 5 in einem Druckzustand und
- Fig. 9: eine Detailansicht des Bereichs D der Schnittansicht gemäß Figur 8.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist.

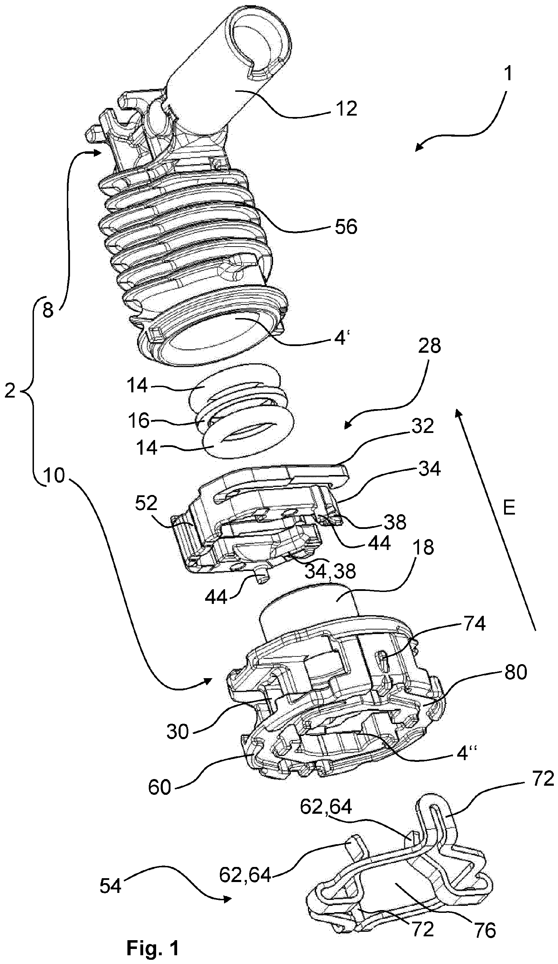

Wie in Figur 1 dargestellt, weist der Steckverbinder 1 zur Herstellung von Schlauch- und/oder Rohrverbindungen ein Kupplungsteil 2 auf. Das Kupplungsteil 2 weist weiterhin einen Einsteckkanal 4 für ein in eine Einsteckrichtung E zu montierendes Steckerteil 6 auf.

Zweckmäßig ist das Kupplungsteil 2 mehrteilig ausgebildet. Dadurch ist die Herstellung, insbesondere zur Erzeugung von Hinterschnitten in Einsteckrichtung E, vereinfacht. Vorzugsweise ist das Kupplungsteil 2, wie insbesondere in den Figuren 1, 5, 6 und 8 zu erkennen, zweiteilig ausgebildet. Das Kupplungsteil 2 ist dabei bevorzugt aus einem Grundkörper 8 und einem Aufnahmekörper 10 gebildet. Abhängig von dem Verwendungszweck und/oder -ort kann der Aufnahmekörper 10 mit dem Grundkörper 8 reversibel oder irreversibel, insbesondere kraft- und/oder form- oder stoffschlüssig, verbindbar sein.

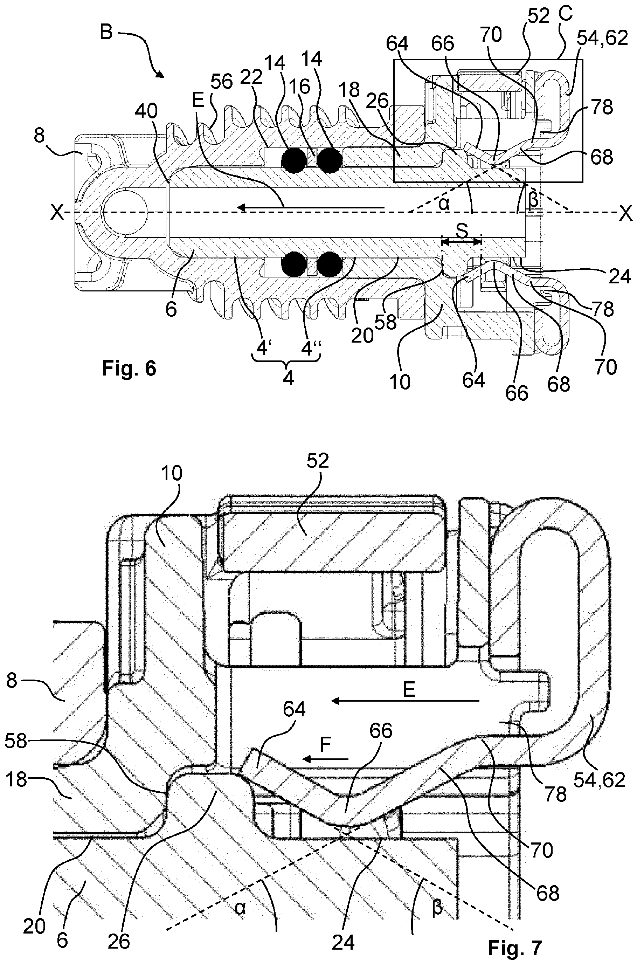

Wie in Figur 1 dargestellt, weist der Grundkörper 8 vorzugsweise einen Kanal 4' und der Aufnahmekörper 10 insbesondere einen Kanal 4" für das in Einsteckrichtung E zu montierende Steckerteil 6 auf. Der Grundkörper 8 ist dabei derart mit dem Aufnahmekörper 10 verbindbar, dass die jeweiligen Kanäle 4', 4" koaxial zueinander ausgerichtet sind und, wie in Figur 6 dargestellt, gemeinsam den Einsteckkanal 4 des Kupplungsteils 2 im verbundenen Zustand bilden.

Das Kupplungsteil 2, insbesondere der Grundkörper 8, kann einseitig insbesondere mit einer nicht dargestellten Fluidleitung verbunden werden. Vorzugsweise ist dafür, wie in den Figuren 1, 4 und 5 dargestellt, ein Anschlussabschnitt 12 ausgebildet. Eine anzuschließende Medienleitung kann insbesondere als Schlauch oder Rohr ausgebildet sein. Es kann vorgesehen sein, dass die Fluidleitung form- und/oder kraftschlüssig oder auch stoffschlüssig angebunden wird. Weiterhin kann das Kupplungsteil 2 unmittelbar an einem Aggregat oder einem anderen Element eines Fluidleitungssystems angeschlossen sein.

In dem Einsteckkanal 4 des Kupplungsteils 2, insbesondere in dem Kanal 4' des Grundkörpers 8, kann ein Dichtungspaket angeordnet sein, welches vorzugsweise zwei Dichtungsringe 14, insbesondere elastomere O-Ringe, und dazwischen einen Abstandsring 16 umfasst. Das Dichtungspaket ist in Figur 1 gelöst und in der Figur 6 im Einsteckkanal 4 montiert dargestellt. Vorzugsweise liegt dieses Dichtungspaket entgegen der Einsteckrichtung E an einem in Einsteckrichtung E weisenden Verbindungsansatz 18 des Aufnahmekörpers 10 oder gemäß einer nicht dargestellten Ausführung an einem Stützring an. Durch den Stützring, der wie der Abstandsring 16 aus einem festeren Material als die O-Ringe besteht, wird einer Spaltextrusion der Dichtringe 14, insbesondere der elastomeren O-Ringe, entgegengewirkt. Das Dichtungspaket dichtet dabei zweckmäßig einen Außenumfang eines Dichtabschnitts 20 des zu montierenden Steckerteils 6 nach dessen Montage gegen eine Innenwandung 22 des Einsteckkanals 4 ab.

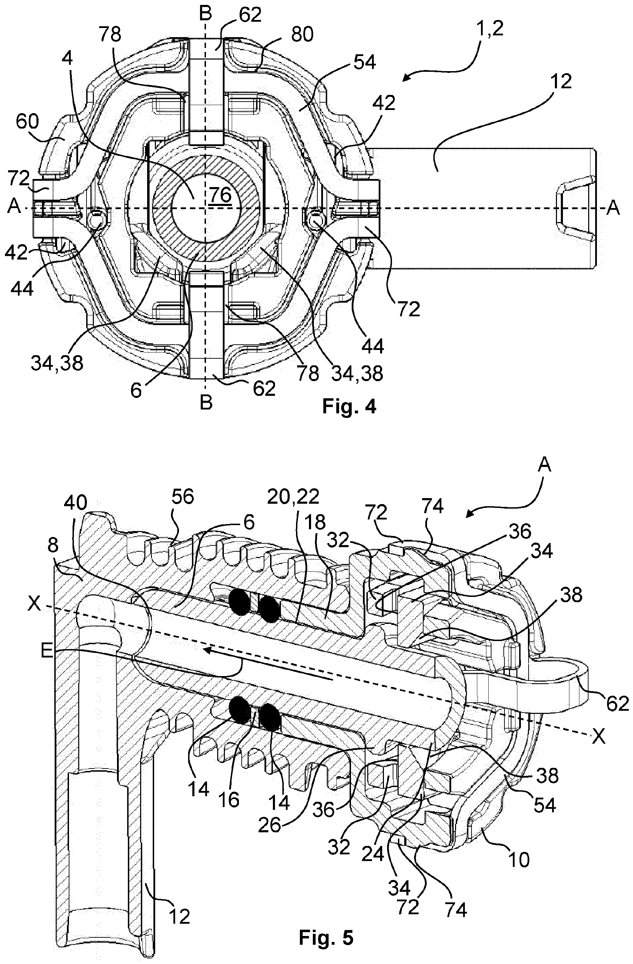

Bei dem Steckerteil 6 handelt es sich insbesondere um einen SAE J 2044 Male-Stecker. Das Steckerteil 6 ist schematisch in den Figuren 4 bis 9 dargestellt, wobei auf eine gesonderte Darstellung eines sich in Einsteckrichtung E erstreckenden Fluidkanals, welcher durch das Steckerteil 6 hindurch verläuft, verzichtet ist. Grundsätzlich ist das Steckerteil 6 hohlzylindrisch ausgebildet und weist insbesondere den Dichtabschnitt 20 und einen in Einsteckrichtung E vor dem Dichtabschnitt 20 angeordneten Verriegelungsabschnitt 24 auf. Der Dichtabschnitt 20 ist in einem eingesteckten Zustand vorzugsweise vollständig im Einsteckkanal 4 des Kupplungsteils 2 angeordnet. Zweckmäßig wird der Dichtabschnitt 20 von dem Verriegelungsabschnitt 24 durch einen im Durchmesser vergrößerten umlaufenden Ringbund 26 separiert.

Das Kupplungsteil 2 weist weiterhin, wie in Figur 1 dargestellt, ein Halteteil 28 auf. Das Halteteil 28 ist dabei in einer Aufnahmeöffnung 30 des Kupplungsteils 2 angeordnet und kann in einer Riegelstellung das zu montierende Steckerteil 6 entgegen der Einsteckrichtung E blockieren.

Die Aufnahmeöffnung 30 ist gemäß einer bevorzugten Ausführungsform in einem Aufnahmekörper 10 des zweiteiligen Kupplungsteils 2 angeordnet, siehe Figur 1.

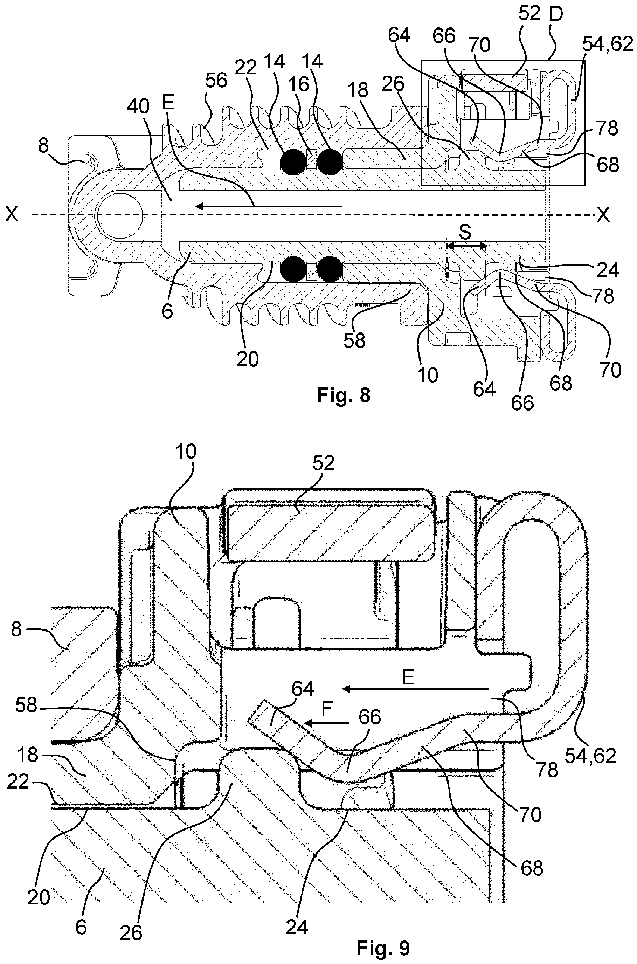

Das Halteteil 28 ist insbesondere in den Figuren 5 bis 9 in der Riegelstellung dargestellt, wobei die Figuren 5 bis 7 den Steckverbinder 1 mit einem eingesteckten Steckerteil 6 in einem Ruhezustand ohne eine Druckbelastung darstellen. Die Figuren 8 und 9 zeigen dagegen den Steckverbinder 1 in einem Druckzustand, bei dem das Steckerteil 6 zweckmäßig mit einem Ringbund 26 an dem Halteteil 28 anliegt und zumindest formschlüssig gegen eine Bewegung entgegen der Einsteckrichtung E blockiert wird.

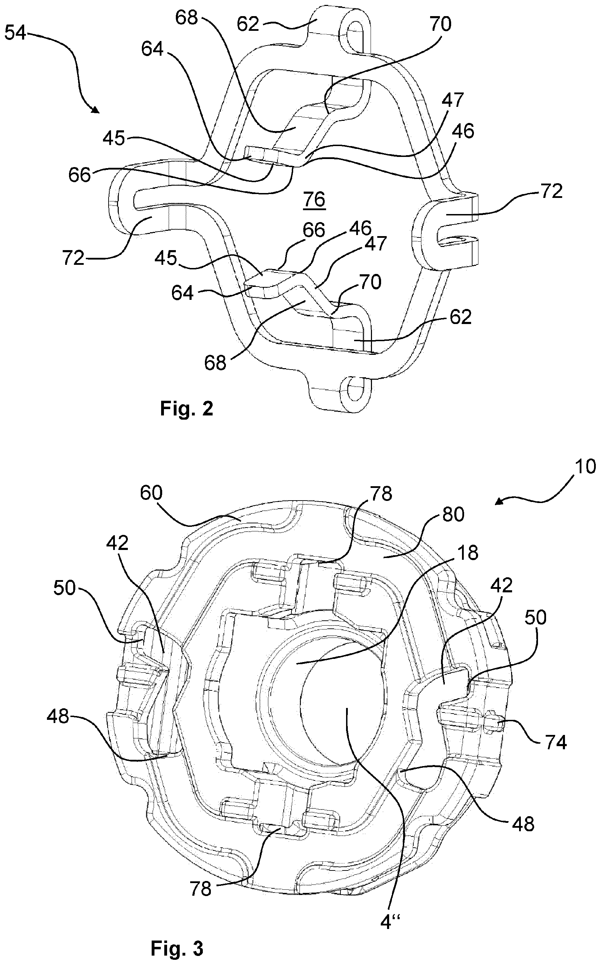

Vorzugsweise ist das Halteteil 28 als Halteklammer ausgebildet, wobei der Aufnahmekörper 10 bzw. das Kupplungsteil 2 im Bereich der Aufnahmeöffnung 30 als Klammerkäfig ausgebildet ist. Diese vorteilhafte Ausführung ist insbesondere in Figur 1 und 3 dargestellt.

Das als Halteklammer ausgebildete Halteteil 28 ist vorzugsweise senkrecht zur Einsteckrichtung E in die als Klammerkäfig ausgebildete Aufnahmeöffnung 30 einsteckbar. Das als Halteklammer ausgebildete Halteteil 28 weist dabei insbesondere ein in Einsteckrichtung E betrachtet U-förmiges Profil auf. Die Aufnahmeöffnung 30 ist insbesondere komplementär zu der Halteklammer senkrecht zur Einsteckrichtung E im Kupplungsteil 2 ausgebildet und insbesondere auf zwei gegenüberliegenden Seiten geöffnet; insbesondere weist die Aufnahmeöffnung 30 eine Eintrittsöffnung und eine Austrittsöffnung auf.

Das Halteteil 28 ist zweckmäßig in der Aufnahmeöffnung 30 des Kupplungsteils 2 vormontierbar. Das als Halteklammer ausgebildete Halteteil 28 kann dabei vorzugsweise zumindest zwei Stellungen, eine Lösestellung und eine Riegelstellung, insbesondere drei Stellungen, zusätzlich eine Vormontagestellung, einnehmen.

Zumindest in den nicht dargestellten Löse- und Vormontagestellungen ist das zu montierende Steckerteil 6 durch die Halteklammer in den Einsteckkanal 4 einführbar.

Zweckmäßig ist das Steckerteil 6 zumindest in der Lösestellung entgegen der Einsteckrichtung E aus dem Einsteckkanal 4 entnehmbar. Vorzugsweise verriegelt das als Halteklammer ausgebildete Halteteil 28 das Steckerteil 6 formschlüssig, indem die Halteklammer den Ringbund 26 des Steckerteils 6 gegen eine Bewegung entgegen der Einsteckrichtung E blockiert.

Das als Halteklammer ausgebildete Halteteil 28 weist insbesondere, wie in den Figuren 1 und 5 dargestellt, zwei Paare von Federarmen auf. Zweckmäßig besteht ein Paar der Federarme aus jeweils einem Positionsarm 32 und einem Funktionsarm 34. Vorteilhaft sind die Positionsarme 32 jeweils in Einsteckrichtung E gesehen hinter dem jeweiligen Funktionsarm 34 angeordnet.

Die Funktionsarme 34 und Positionsarme 32 sind dabei jeweils radial zum Einsteckkanal 4 gegenüberliegend zueinander angeordnet. Vorteilhaft sind die Positionsarme 32 als Verliersicherung ausgebildet und hintergreifen in einer Vormontagestellung der Halteklammer ein Lageelement, welches in der Aufnahmeöffnung 30 ausgebildet ist.

Zweckmäßig ragen die Funktionsarme 34 und die Positionsarme 32 in den Einsteckkanal 4 hinein. Insbesondere sind die Funktionsarme 34 und Positionsarme 32 dabei jeweils derart radial zum Einsteckkanal 4 gegenüberliegend zueinander beabstandet angeordnet, dass sie den Einsteckkanal 4 nicht versperren und ein Einstecken des Steckerteils 6 in Einsteckrichtung E ermöglichen. Vorteilhaft kann über die konstruktive Gestaltung des Abstands zwischen den Funktionsarmen 34 bzw. den Positionsarmen 32 eine aufzubringende Steckkraft zum Einstecken des Steckerteils 6 in den Einsteckkanal 4 eingestellt werden.

Die Funktionsarme 34 weisen insbesondere eine vorzugsweise zum Einsteckkanal 4 senkrecht ausgebildete, in Einsteckrichtung E weisende Blockierseite 36 und eine entgegen der Einsteckrichtung E weisende und zumindest bereichsweise abgeschrägte Einführseite 38 auf. Die Einführseite 38 ist derart abgeschrägt, dass beim Einstecken des zu montierenden Steckerteils 6 die Einführseite 38 mit dem abgeschrägten Abschnitt in Anlagekontakt mit dem Ringbund 26 des Steckerteils 6 kommt und die Funktionsarme 34 radial zum Einsteckkanal 4 nach außen elastisch verformt werden. Die Blockierseite 36 ist vorteilhaft derart ausgebildet, dass, sobald das Steckerteil 6 so weit in Einsteckrichtung E in den Einsteckkanal 4 eingesteckt ist, dass der Ringbund 26 des Steckerteils 6 in Einsteckrichtung E hinter dem Funktionsarm 34 angeordnet ist, sich der Funktionsarm 34 radial zum Einsteckkanal 4 rückverformt und mit der Blockierseite 36 den Ringbund 26 entgegen der Einsteckrichtung E formschlüssig blockiert.

Das Steckerteil 6 wird vorteilhafterweise so weit in Einsteckrichtung E in den Einsteckkanal 4 eingesteckt, bis der Ringbund 26 von dem Funktionsarm 34 hintergriffen wird. Bei diesem Montageverfahren ist vorzugsweise ein so genanntes Überstecken, d. h. ein im Hinblick auf die eigentliche Rastposition übermäßiges Einstecken des Steckerteils 6 in Einsteckrichtung E, um das Hintergreifen des Halteteils 28 zu ermöglichen, vorteilhaft. Diesbezüglich bildet der in Einsteckrichtung E hinterste Abschnitt des Einsteckkanals 4 des Kupplungsteils 2 einen in den Figuren 6 und 8 dargestellten Übersteckraum 40.

Zweckmäßig sind die Federarme, insbesondere die Funktionsarme 34 und die Positionsarme 32, derart ausgebildet, dass sie den Dichtabschnitt 20 des Steckerteils 6 bei der Montage und/oder der Demontage des Steckerteils 6 nur geringfügig, vorzugsweise nicht, berühren.

Entsprechend Figur 1 weist der Steckverbinder 1 ein Rückstellelement 54 auf, welches zumindest teilweise in dem Einsteckkanal 4 des Kupplungsteils 2 angeordnet ist. Das Rückstellelement 54 ist in einer vorteilhaften Ausführung als Federklammer in Figur 2 gesondert dargestellt.

Wie insbesondere in den Figuren 6 bis 9 zu erkennen, ist das Rückstellelement 54 derart ausgebildet, dass in einem montierten Zustand mit vollständig eingestecktem Steckerteil 6 auf das Steckerteil 6, insbesondere stets, eine Rückstellkraft F in Einsteckrichtung E ausgeübt wird. Dies wird durch eine vorgespannte Anordnung des Rückstellelements 54 erreicht. Dabei ist das Rückstellelement 54 entgegen der Einsteckrichtung E, entsprechend der Darstellung im Druckzustand gemäß den Figuren 8 und 9, durch das Steckerteil 6 in einem elastischen Bereich verformbar. Insbesondere ist das Rückstellelement in dem elastischen Bereich federelastisch verform bar.

Gemäß einer nicht dargestellten Ausführung kann der Steckverbinder 1 und/oder die mit dem zu montierenden Steckerteil 6 verbundene Fluidleitung elektrisch beheizt ausgebildet sein. Vorteilhaft ist zur Beheizung des Steckverbinders 1 ein Heizmittel an dem Kupplungsteil 2, insbesondere dem Grundkörper 8 und/oder dem Aufnahmekörper 10, angeordnet, vorzugsweise um das Kupplungsteil 2 bzw. um den Grundkörper 8 und/oder den Aufnahmekörper 10 gewickelt. Das Heizmittel ist vorzugsweise als elektrisches Heizmittel, insbesondere als ein ein- oder mehradriger Heizdraht bzw. Heizleiter ausgebildet.

Zweckmäßig weist das Kupplungsteil 2, insbesondere der Grundkörper 8, wie in den Figuren 1, 5, 6 und 8 dargestellt, einen Heizabschnitt auf, in dem das Heizmittel angeordnet wird. Insbesondere ist im Heizabschnitt zumindest ein Führungselement zur Führung und Lenkung des Heizmittels ausgebildet. Das Führungselement 56 ist gemäß einer bevorzugten Ausführungsform eine wendelförmige Führungsrille, welche sich um den Umfang des Kupplungsteils 2 spiralartig erstreckt.

Erfindungsgemäß stützt sich das Rückstellelement 54, wie insbesondere in den Figuren 5 bis 9 dargestellt, unmittelbar axial und radial an dem Kupplungsteil 2 ab.

Mittels der erfindungsgemäßen Ausführung wird vorteilhaft das Rückstellelement 54 von dem Halteteil 28 entkoppelt. Insbesondere entfällt die Notwendigkeit eines Stützrings, welcher das Rückstellelement 54 gegen das Halteteil 28 verspannt.

Auf das Halteteil 28 wird weiterhin durch die Entkopplung nicht stets eine Kraft auf das Halteteil 28 ausgeübt, welche im Stand der Technik durch das gegen das Halteteil 28 vorgespannte Rückstellelement 54 erzeugt wird. Dadurch ist das Halteteil 28 besonders vorteilhat zwischen seinen jeweiligen Stellungen, insbesondere zwischen der Riegelstellung, der Lösestellung oder der Vormontagestellung, in der Aufnahmeöffnung 30 verstellbar.

Zum Zweck des Überstreckens bei der Montage ist das Steckerteil 6 mit einem axialen Steckspiel S in dem Einsteckkanal 4 montierbar. Das Steckspiel S ist in den Figuren 7 und 9 dargestellt und wird begrenzt durch einen in Einsteckrichtung E betrachtet hinteren Anschlag 58 für das Steckerteil 6, insbesondere für den Ringbund 26 des Steckerteils 6 im Einsteckkanal 4 und das in Einsteckrichtung E betrachtet vor dem hinteren Anschlag 58 angeordnete Halteteil 28 in Riegelstellung. Auf das Halteteil 28 wirkt erfindungsgemäß erst dann eine entgegen der Einsteckrichtung E wirkende Kraft, wenn das Steckerteil 6 entgegen der Einsteckrichtung E bis zu einem Anlagekontakt mit dem Halteteil 28 verschoben wurde, siehe Druckzustand in Figur 8. Dadurch wird vorteilhaft der Werkstoff des Halteteils 28 geschont.

Wie in Figur 8 dargestellt, ist das Rückstellelement 54 entgegen der Einsteckrichtung E elastisch verformbar. Insbesondere wird das Rückstellelement 54 durch eine Verschiebung des Steckerteils 6 entgegen der Einsteckrichtung E und entgegen der Vorspannkraft des Rückstellelements 54 elastisch verformt. Durch diese Verschiebung des Steckerteils 6 wird der Übersteckraum 40 vergrößert. Insbesondere ist das Steckerteil 6 entgegen der Einsteckrichtung E und entgegen der Vorspannkraft bzw. Rückstellkraft F auf Grund einer Volumenausdehnung eines, insbesondere im Übersteckraum 40, gefrierenden Mediums verschiebbar. Insbesondere dehnt sich beim Gefrieren nicht nur das Medium im Übersteckraum 40 aus, sondern auch das sich in dem Steckerteil 6 befindliche Medium. Problematisch ist insbesondere bei Steckverbindern, bei denen der Einsteckkanal 4 und Anschlussabschnitt 12 mit einem Winkel zueinander ausgebildet sind, insbesondere wie in den Figuren 4 und 5 dargestellt in einem Winkel von 90°, dass eine entstehende Eissäule im Knick vor die Wandung drückt. Durch die Vergrößerung des Übersteckraums 40 wird vorteilhaft der auf das Kupplungsteil 2 wirkende Druck verringert.

Das Rückstellelement 54 ist insbesondere derart ausgebildet, dass die Rückstellkraft F vorzugsweise größer ist als eine gegen die Einsteckrichtung E wirkende Kraft, welche von einem Betriebsdruck ausgeht. Dadurch wird im Betrieb der Übersteckraum 40 möglichst klein gehalten. Weiterhin ist das Rückstellelement vorteilhaft derart ausgebildet, dass die Rückstellkraft F vorzugsweise geringer ist als eine gegen die Einsteckrichtung E wirkende Kraft, welche von der sich bildenden Eissäule erzeugt wird, so dass der vorteilhafte Schutzmechanismus durch Volumenvergrößerung des Übersteckraums 40 gewährleistet ist.

Eine weitere vorteilhafte Wirkung der erfindungsgemäßen Ausführung ist, dass insbesondere die Notwendigkeit eines speziellen Male-Steckers mit einer im Durchmesser reduzierten Aufnahme für das Rückstellelement 54 entfällt. Entsprechend können die Steckerteile 6 eine, in den Figuren 6 und 8 dargestellte, universelle äußere Steckerkontur aufweisen.

Gemäß einer vorteilhaften Ausführung der Erfindung ist das Rückstellelement 54 in Einsteckrichtung E betrachtet frontseitig an einer Stirnwand 60 des Kupplungsteils 2 angeordnet. Insbesondere in den Figuren 1 und 3 bis 9 ist zu erkennen, dass das Kupplungsteil 2 mehrteilig zumindest aus einem Grundkörper 8 und zumindest einem Aufnahmekörper 10 gebildet ist. In dieser Ausführung ist die Stirnwand 60 frontseitig des Aufnahmekörpers 10 ausgebildet. Das Rückstellelement 54 erstreckt sich vorteilhaft zumindest teilweise mit einer elastisch verformbaren Federlasche 62 in Einsteckrichtung E in den Einsteckkanal 4. Vorteilhaft wird dabei der Bauraumbedarf zur Wahrung der Rückstellfunktion innerhalb des Einsteckkanals 4 reduziert. Weiterhin ist die Wartung und der Austausch eines an der Stirnwand 60 des Kupplungsteils 2 angeordneten Rückstellelements 54 einfacher. Ein für diese Ausführung geeignetes vorteilhaftes Rückstellelement 54 ist in Figur 2 dargestellt.

In einer bevorzugten Ausführung weist ein im Einsteckkanal 4 angeordnetes freies Ende der Federlasche 62 einen Kontaktarm 64 auf, welcher sich in Einsteckrichtung E erstreckt. Der Kontaktarm 64 ist dabei vorzugsweise an einem ersten Knickpunkt 66 angeformt, wie in den Figuren 2 und 6 bis 9 dargestellt. Dabei ist der Kontaktarm 64 derart ausgebildet, dass er zu einer zentralen Strömungsachse X des Einsteckkanals 4 einen Kontaktwinkel α im Bereich von größer 0° bis 90° einschließt. Der Kontaktwinkel α ist in den Figuren 6 und 7 des Steckverbinders im Ruhezustand für lediglich eine Federlasche 62 gekennzeichnet. Zweckmäßig ist der Kontaktarm 64 zur Kontaktierung des Ringbunds 26 des Steckerteils 6 ausgebildet. Der Kontaktarm 64 ist in dieser Ausführung vorteilhaft, da er bei einer elastischen Verformung des Rückstellelements 54 bzw. der Federlasche 62 stets den Kontakt zum Ringbund 26 gewährleistet. Durch die schräge, insbesondere in Einsteckrichtung E radial zur Strömungsachse X ansteigende Ausbildung bietet der Kontaktarm 64 dem Ringbund 26 eine besonders große Kontaktfläche zumindest über das Steckspiel S.

In einer optionalen Ausführung des Steckverbinders 1 mit einer einen Kontaktarm 64 aufweisenden Federlasche 62 weist die Federlasche 62 einen Verbindungsarm 68 auf. Die vorteilhafte Ausführung der Federlasche 62 mit einem Kontaktarm 64 und einem Verbindungsarm 68 ist insbesondere in den Figuren 2 und 6 bis 9 erkennbar dargestellt. Der Verbindungsarm 68 erstreckt sich bevorzugt von dem Kontaktarm 64 aus entgegen der Einsteckrichtung E in einem Winkel β zur zentralen Strömungsachse X. Insbesondere erstreckt sich der Verbindungsarm 68 von dem ersten Knickpunkt 66 aus vorzugsweise zu einem zweiten Knickpunkt 70. Der Winkel β ist in den Figuren 6 und 7 des Steckverbinders im Ruhezustand für lediglich eine Federlasche 62 gekennzeichnet. Bevorzugt ist der Verbindungsarm 68, entsprechend in den Figuren 6 bis 9 dargestellt, derart abgewinkelt ausgebildet, dass er mit der zentralen Strömungsachse X mit dem Winkel β einen Bereich von größer 0° bis 90° einschließt. Vorteilhaft sind der Kontaktarm 64 und der Verbindungsarm 68 in einem Längsschnitt parallel zur Einsteckrichtung V-förmig zueinander angeordnet. Der Längsschnitt entspricht insbesondere dem Schnitt B - B gemäß Figur 4. Insbesondere ist die sich aus dem Kontaktarm 64 und aus dem Verbindungsarm 68 ergebende V-Form radial zum Einsteckkanal 4 nach außen weisend geöffnet.

Um den Dichtabschnitt 20 des Steckerteils 6 bei der Montage und Demontage axial zur Einsteckrichtung nicht zu beschädigen, weist der erste Knickpunkt 66 der Federlasche 62 des Rückstellelements 54 auf einer dem Steckerteil 6 senkrecht zur Strömungsachse X zugewandten Unterfläche 45 einen Radius auf. Diese Ausführung ist beispielhaft in Figur 2 an einer Federlasche 62 dargestellt. Vorteilhaft weist die Federlasche 62 des Rückstellelements 54, insbesondere der Kontaktarm 64 und der Verbindungsarm 68 bzw. der erste Knickpunkt 66, keine scharfen Kanten bzw. Grate oder grobe Rauigkeiten auf. Fertigungsbedingte Kanten bzw. Grate oder Rauigkeiten können vorteilhaft durch eine nachträgliche Oberflächenbearbeitung eingestellt werden. Vorzugsweise sind die Kanten 46 der seitlichen Übergänge der Federlasche 62 von der dem Steckerteil 6 senkrecht zur Strömungsachse X zugewandten Unterfläche 45 zu einer sich senkrecht zur Strömungsachse X erstreckenden Seitenfläche 47 der Federlasche 62 zumindest im Bereich des ersten Knickpunktes 66 gebrochen. Vorteilhaft stehen die Kanten 46 nicht im Eingriff mit dem Dichtabschnitt 20 des Steckerteils 6.

Insbesondere ist die tatsächliche Länge der Federlasche 62 auf Grund der V-Form größer, als die Erstreckung in Einsteckrichtung. Das erhöht die Elastizität, da der tatsächliche Bauraumbedarf in Einsteckrichtung E geringer ist als die Summe der Länge der einzelnen Arme. Weiterhin ermöglicht die V-Form ein einfacheres Einführen des Steckerteils 6 in Einsteckrichtung E in den Einsteckkanal 4. Insbesondere gleitet das Steckerteil 6 mit dem Ringbund 26 beim Einführen in Einsteckrichtung E derartig über den Verbindungsarm 68, dass die Federlasche 62 radial zum Einsteckkanal 4 nach außen weisend elastisch verformt wird, bis der Ringbund 26 in Einsteckrichtung E gesehen hinter dem ersten Knickpunkt 66 angeordnet ist und der Ringbund 26 in Anlagekontakt mit dem Kontaktarm 26 ist.

Um das Steckerteil 6 gegen die Einsteckrichtung E aus dem Einsteckkanal 4 zu entnehmen, ist die Federlasche 62 insbesondere durch das Einwirken des Ringbunds 26 auf den Kontaktarm 64 bei einer Verschiebung des Steckerteils 6 gegen die Einsteckrichtung E radial zum Einsteckkanal 6 nach außen weisend elastisch verformbar.

Auf Grund der V-förmigen Anordnung des Kontaktarms 64 und des Verbindungsarms 68 zueinander wird vorteilhaft sowohl beim Einführen in Einsteckrichtung E als auch beim Entnehmen gegen die Einsteckrichtung E des Steckerteils 6 durch die radiale elastische Verformung der Federlasche 62 eine zumindest teilweise axial zur Einsteckrichtung E wirkende Rückstellkraft erzeugt. Insbesondere ein Verhältnis zwischen der axialen Kraft und der radialen Kraft, welche durch das Rückstellelement 54 auf das Steckerteil 6, insbesondere den Ringbund 26, wirkt, ist insbesondere über den Kontaktwinkel α und den Winkel β für und gegen eine Verschiebung des Steckerteils 6 in Einsteckrichtung E bestimmbar.

Vorzugsweise ist das Rückstellelement 54 derart im Kupplungsteil 1 angeordnet, dass keine Wirkverbindung zwischen dem Halteteil 28 und dem Rückstellelement 54 besteht. Eine derartige Entkopplung wird vorteilhaft realisiert, indem das Rückstellelement 54 sich mit einer Federlasche 62 in Einsteckrichtung E in den Einsteckkanal 4 erstreckt und insbesondere durch einen zwischen den beiden Funktionsarmen 34 und zwischen den beiden Positionsarmen 32 ausgebildeten senkrechten Spalt eines als Halteklammer ausgebildeten Halteteils 28 hindurchgreift und sich am Steckerteil 6 abstützen kann.

Diese Ausführung ist insbesondere auch mit zwei sich gegenüberliegend zum Einsteckkanal 6 angeordneten Federlaschen 62 ausführbar, wobei jeweils eine Federlasche 62 durch den Teil des Spalts zwischen den beiden Funktionsarmen 34 und den beiden Positionsarmen 32 hindurchgreift, welcher oberhalb und unterhalb des einzusteckenden Steckerteils 6 ausgebildet ist.

In den Figuren 1, 3 und 5 ist eine vorteilhafte Ausführung erkennbar, bei der das Rückstellelement 54 zumindest eine zumindest teilweise in Einsteckrichtung E weisende Befestigungslasche 72 aufweist. Die abgebildete vorteilhafte Ausführung des Rückstellelements 54, insbesondere in der Ausbildung als Federklammer, hat zwei sich um den Einsteckkanal 4 gegenüberliegend angeordnete Befestigungslaschen 72 angeformt. Am äußeren Umfang des Kupplungsteils 2, insbesondere am äußeren Umfang des Aufnahmekörpers 10 des Kupplungsteils 2, ist vorteilhaft zumindest eine zu der jeweiligen Befestigungslasche 72 korrespondierend ausgebildete und angeordnete Rippe 74 angeordnet, insbesondere angeformt. Die jeweilige Befestigungslasche 72 ist dabei vorteilhaft in die jeweilig korrespondierende Rippe 74 einhakbar, einrastbar oder einclipsbar ausgebildet.

Die Ausführung mit mindestens einer solchen Befestigungslasche 72 ermöglicht durch die äußere Befestigung des Rückstellelements 54, dass der Bauraumbedarf innerhalb des Einsteckkanals 4 kleingehalten wird. Weiterhin ist die Montage vereinfacht, da die Verbindung zwischen Befestigungslasche 72 und Rippe 74 leicht für einen Anwender optisch erkennbar, herstellbar und kontrollierbar ist.

Wie eingangs erwähnt, kann das Rückstellelement 54 in einer bevorzugten und in den Figuren 1, 2 und 4 bis 9 dargestellten Ausführung als Federklammer ausgebildet sein. Zweckmäßig umschließt die Federklammer ringförmig den Einsteckkanal 4 derart, dass das zu montierende Steckerteil 6 in Einsteckrichtung E durch eine Durchführöffnung 76 der Federklammer hindurch in den Einsteckkanal 4 einführbar ist. Die ringförmige Ausführung der Federklammer erhöht insbesondere den Widerstand gegen eine Verformung radial zum Einsteckkanal 4. Weiterhin wird besonders vorteilhaft eine Stützfläche zur Abstützung an dem Kupplungsteil 2, insbesondere an der Stirnwand 60, in Einsteckrichtung E geschaffen.

Um sowohl die vorteilhafte Rückstellkraft F zu generieren als auch sich im erforderlichen Umfang am Kupplungsteil 2 abzustützen, kann die Federklammer vorzugsweise zwei, insbesondere zur Durchführöffnung 76 gegenüberliegend ausgebildete, Federlaschen 62 und/oder vorzugsweise zwei, insbesondere zur Durchführöffnung 76 gegenüberliegend ausgebildete, Befestigungslaschen 72 aufweisen. Eine gleichmäßige Verteilung der Federlaschen 62 zueinander und/oder der Befestigungslaschen 72 zueinander hat die Wirkung, dass die jeweiligen Kräfte auf das Steckerteil 6 und/oder auf das Kupplungsteil 2 gleichmäßig übertragen werden und die Gefahr eins Verkeilens bzw. Verdrehens des Rückstellelements 54 und/oder des Steckerteils 6 verringert wird. Besonders vorteilhaft für den Bauraum und die Verteilung hat sich in diesem Zusammenhang erwiesen, wenn die Federlaschen 62 und die Befestigungslaschen 72 jeweils um 90° um die Durchführöffnung 76 versetzt zueinander beabstandet angeordnet sind.

Sofern eine Anpassung an die Einsatzbedingungen des Steckverbinders 1 erforderlich ist, kann das Rückstellelement 54, insbesondere die Federklammer, auch weniger oder mehr als zwei Federlaschen 62 und/oder Befestigungslaschen 72 aufweisen.

Erfindungsgemäß hat das Kupplungsteil 2 in einer Innenwandung 22 des Einsteckkanals 4 zumindest eine Führungsnut 78 zur Führung zumindest eines Teils des Rückstellelements 54, insbesondere der Federlasche 62, ausgebildet. Figur 3 zeigt in diesem Zusammenhang eine Ausführung des Aufnahmekörpers 10 des Kupplungsteils 2 mit zwei derartigen Führungsnuten 78, jeweils eine für je eine Federlasche 62. Erfindungsgemäß ist die Führungsnut 78 zumindest einseitig entgegen der Einsteckrichtung E frontseitig des Kupplungsteils 2 geöffnet ausgebildet und erstreckt sich in Einsteckrichtung E. Wie in Figur 3 dargestellt, ist die Führungsnut 78 vorteilhaft zum Einsteckkanal 4 und zur Stirnwand 60 geöffnet und ermöglicht insbesondere das Einstecken eines Rückstellelement 54 in Einsteckrichtung E.

Vorteilhaft hat das Kupplungsteil 2, insbesondere der Aufnahmekörper 10, wie insbesondere in den Figuren 3 und 4 dargestellt, in der Stirnwand 60 eine den Einsteckkanal 4 umschließende Auflagenut 80 zur Lagerung des Rückstellelements 54 ausgebildet. Dabei sind das Rückstellelement 54 und die Auflagenut 80 vorzugsweise derart korrespondierend zueinander ausgebildet, dass das Rückstellelement 54 gegen ein Verschieben senkrecht zur Einsteckrichtung E und gegen ein Rotieren um den Einsteckkanal 4 in der Auflagenut 80 gelagert ist. Neben der Sicherung der funktionsgewährleistenden Position und Ausrichtung des Rückstellelements 54 hat die Auflagenut 80 den Vorteil, dass das Rückstellelement 54 zumindest teilweise in Einsteckrichtung E in der Stirnwand 60 des Kupplungsteils 2 versenkt angeordnet ist. Dadurch wird eine Angriffsfläche für äußere Einflüsse verringert und die Montage vereinfacht. Insbesondere ist in einem weiteren vorteilhaften Aspekt mittels der Auflagenut 80 eine Fehlmontage praktisch nicht möglich.

Vorzugsweise ist das Rückstellelement 54 aus Federstahl ausgebildet. Vorteilhaft ist das Rückstellelement 54 aus Federstahl gegenüber einem Rückstellelement 54 aus einem Gummiwerkstoff bzw. einem elastomeren Werkstoff sehr resistent gegenüber Temperaturschwankungen.

Hinsichtlich der Produktion ist es vorteilhaft, wenn das Kupplungsteil 2 oder der Aufnahmekörper 10 und/oder der Grundkörper 8 zweckmäßig jeweils monolithisch, insbesondere im Spritzgussverfahren hergestellt ausgebildet sind.

Zur Vormontage des Steckverbinders 1 wird zunächst das Dichtpaket in das Kupplungsteil 2, insbesondere den Grundkörper 8, eingesetzt. Sofern der Steckverbinder 1 zweiteilig ist, wird anschließend der Aufnahmekörper 10 mit dem Grundkörper 8 zusammengeführt und insbesondere stoffschlüssig verbunden.

Danach wird das Halteteil 28, insbesondere die Halteklammer, senkrecht zur Einsteckrichtung E in die Aufnahmeöffnung 30 eingesetzt, so dass zunächst ein Vormontagezustand entsteht, bei dem Führungszapfen 44 der Funktionsarme 34 in komplementäre Führungsschlitze 42 eingreifen. In der Vormontagestellung sind die Führungszapfen 44 in einer Vormontagekontur 48 angeordnet und das Lageelement in der Aufnahmeöffnung 30 von den Positionsarmen 32 hintergriffen. In diesem Zustand kann der Steckverbinder 1 ausgeliefert werden.

Alternativ, gegebenenfalls sogar bevorzugt, kann der Aufnahmekörper 10 auch schon vor dem Verbinden mit dem Grundkörper 8 mit dem Halteteil 28, insbesondere der Halteklammer und dem Rückstellelement 54, vormontiert werden. Bei der späteren Endmontage wird das Steckerteil 6 in Einsteckrichtung E in den Einsteckkanal 4 eingeführt. Dabei berührt der Ringbund 26 des Steckerteils 10 beim Passieren des Halteteils 28 insbesondere die Einführseite 38 der Funktionsarme 34. Vorzugsweise ist die Einführseite 38 derart ausgebildet, dass die Halteklammer vor einem radialen Aufweiten der Funktionsarme 34 radial tiefer in die Aufnahmeöffnung 30 eingezogen und demzufolge radial elastisch aufgeweitet wird. Danach können die Funktionsarme 34 schließlich hinter dem Ringbund 26 einrasten und eine Bewegung des Steckerteils 6 gegen die Einsteckrichtung E mit ihrer Blockierseite 36 blockieren. Zum Lösen der Steckverbindung wird die Halteklammer durch Drücken auf einen Löseangriff 52 tiefer in die Aufnahmeöffnung 30 verschoben. Dadurch werden die Führungszapfen 44 in den Führungsschlitzen 42 radial nach außen in eine Lösekontur 50 verschoben. Folglich werden dadurch die Funktionsarme 34 aufgeweitet, so dass durch das Aufweiten der Funktionsarme 34 der Ringbund 26 wieder freigegeben wird. Die Verbindung kann nun gelöst werden, indem das Steckerteil 6 entgegen der Einsteckrichtung E aus dem Steckverbinder 1 gezogen wird.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind.

Die Erfindung wird im Anspruch 1 definiert.

### Bezugszeichenliste

- 1: Steckverbinder
- 2: Kupplungsteil
- 4: Einsteckkanal
- 4': Kanal des Grundkörpers
- 4": Kanal des Aufnahmekörpers
- 6: Steckerteil
- 8: Grundkörper
- 10: Aufnahmekörper
- 12: Anschlussabschnitt
- 14: Dichtring
- 16: Abstandsring
- 18: Verbindungsansatz
- 20: Dichtabschnitt
- 22: Innenwandung des Einsteckkanals
- 24: Verriegelungsabschnitt
- 26: Ringbund
- 28: Halteteil
- 30: Aufnahmeöffnung
- 32: Positionsarm
- 34: Funktionsarm
- 36: Blockierseite
- 38: Einführseite
- 40: Übersteckraum
- 42: Führungsschlitz
- 44: Führungszapfen
- 45: Unterfläche
- 46: Kante
- 47: Seitenfläche
- 48: Vormontagekontur
- 50: Lösekontur
- 52: Löseangriff
- 54: Rückstellelement
- 56: Führungselement
- 58: Hinterer Anschlag
- 60: Stirnwand
- 62: Federlasche
- 64: Kontaktarm
- 66: Erster Knickpunkt
- 68: Verbindungsarm
- 70: Zweiter Knickpunkt
- 72: Befestigungslasche
- 74: Rippe
- 76: Durchführöffnung
- 78: Führungsnut
- 80: Auflagenut

- α: Kontaktwinkel
- β: Winkel

- X: Strömungsachse
- E: Einsteckrichtung
- F: Rückstellkraft
- S: Steckspiel

## Patentansprüche

1. Steckverbinder (1) zur Herstellung von Schlauch- und/oder Rohrverbindungen, aufweisend ein Kupplungsteil (2), welcher einen Einsteckkanal (4) für ein in eine Einsteckrichtung (E) zu montierendes Steckerteil (6) aufweist, weiterhin aufweisend ein Halteteil (28), welches in einer Aufnahmeöffnung (30) des Kupplungsteils (2) angeordnet ist und in einer Riegelstellung das zu montierende Steckerteil (6) entgegen der Einsteckrichtung (E) blockieren kann, wobei ein Rückstellelement (54) zumindest teilweise in dem Einsteckkanal (4) des Kupplungsteils (2) angeordnet und derart ausgebildet ist, dass in einem montierten Zustand mit vollständig eingestecktem Steckerteil (6) auf das Steckerteil (6) eine Rückstellkraft (F) in Einsteckrichtung (E) ausgeübt werden kann, wobei das Rückstellelement (54) entgegen der Einsteckrichtung (E) durch das Steckerteil (6) in einem elastischen Bereich verformbar ist, wobei sich das Rückstellelement (54) unmittelbar axial und radial an dem Kupplungsteil (2) abstützt,
**dadurch gekennzeichnet, dass** das Kupplungsteil (2) in einer Innenwandung (22) des Einsteckkanals (4) angeordnet zumindest eine Führungsnut (78) zur Führung zumindest eines Teils des Rückstellelements (54) ausgebildet hat, wobei die Führungsnut (78) zumindest einseitig entgegen der Einsteckrichtung (E) frontseitig des Kupplungsteils (2) geöffnet ausgebildet ist und sich in Einsteckrichtung (E) erstreckt.

2. Steckverbinder (1) nach Anspruch 1,
**dadurch gekennzeichnet, dass** das Rückstellelement (54) in Einsteckrichtung (E) betrachtet frontseitig an einer Stirnwand (60) des Kupplungsteils (2) angeordnet ist und sich zumindest teilweise mit einer elastisch verformbaren Federlasche (62) in Einsteckrichtung (E) in den Einsteckkanal (4) erstreckt.

3. Steckverbinder (1) nach Anspruch 2,
**dadurch gekennzeichnet, dass** ein im Einsteckkanal (4) angeordnetes freies Ende der Federlasche (62) einen, insbesondere an einem ersten Knickpunkt (66) angeformten, Kontaktarm (64) aufweist, wobei sich der Kontaktarm (64) in Einsteckrichtung (E) erstreckt und zu einer zentralen Strömungsachse (X) des Einsteckkanals (4) einen Kontaktwinkel (α) im Bereich von größer 0° bis 90° einschließt, wobei der Kontaktarm (64) zur Kontaktierung eines Ringbunds (26) des Steckerteils (6) ausgebildet ist.

4. Steckverbinder (1) nach Anspruch 3,
**dadurch gekennzeichnet, dass** die Federlasche (62) einen Verbindungsarm (68) aufweist, welcher sich von dem Kontaktarm (64) aus, insbesondere von dem ersten Knickpunkt (66) aus, entgegen der Einsteckrichtung (E) in einem Winkel (β) zur zentralen Strömungsachse (X), insbesondere bis zu einem zweiten Knickpunkt (70), erstreckt, wobei der Verbindungsarm (68) derart abgewinkelt ausgebildet ist, dass er mit der zentralen Strömungsachse (X) mit dem Winkel (β) einen Bereich von größer 0° bis 90° einschließt, so dass der Kontaktarm (64) und der Verbindungsarm (68) V-förmig zueinander angeordnet sind.

5. Steckverbinder (1) nach Anspruch 3 oder 4,
**dadurch gekennzeichnet, dass** der erste Knickpunkt (66) der Federlasche (62) des Rückstellelements (54) auf einer dem Steckerteil (6) senkrecht zur Strömungsachse (X) zugewandten Unterfläche (45) einen Radius aufweist und/oder die Kanten (46) der seitlichen Übergänge der Federlasche (62) von der dem Steckerteil (6) senkrecht zur Strömungsachse (X) zugewandten Unterfläche (45) zu einer sich senkrecht zur Strömungsachse (X) erstreckenden Seitenfläche (47) der Federlasche (62) zumindest im Bereich des ersten Knickpunktes (66) gebrochen sind.

6. Steckverbinder (1) nach einem der Ansprüche 1 bis 5,
**dadurch gekennzeichnet, dass** das Rückstellelement (54) zumindest eine zumindest teilweise in Einsteckrichtung (E) weisende Befestigungslasche (72) aufweist, welche in mindestens eine, am äußeren Umfang des Kupplungsteils (2) korrespondierend angeordnete und ausgebildete, Rippe (74) einhakbar, einrastbar oder einclipsbar ausgebildet ist.

7. Steckverbinder (1) nach einem der Ansprüche 1 bis 6,
**dadurch gekennzeichnet, dass** das Rückstellelement (54) als Federklammer ausgebildet ist, welche ringförmig den Einsteckkanal (4) derart umschließt, dass das zu montierende Steckerteil (6) in Einsteckrichtung (E) durch eine Durchführöffnung (76) der Federklammer hindurch in den Einsteckkanal (4) einführbar ist.

8. Steckverbinder (1) nach Anspruch 7,
**dadurch gekennzeichnet, dass** die Federklammer zwei zur Durchführöffnung (76) gegenüberliegend ausgebildete Federlaschen (62) und zwei zur Durchführöffnung (76) gegenüberliegend ausgebildete Befestigungslaschen (72) ausgebildet hat, wobei die Federlaschen (62) und die Befestigungslaschen (72) jeweils um 90° um die Durchführöffnung (76) versetzt zueinander beabstandet angeordnet sind.

9. Steckverbinder (1) nach Anspruch 8,
**dadurch gekennzeichnet, dass** die Führungsnut (78) zur Führung der Federlasche (62) ausgebildet ist.

10. Steckverbinder (1) nach einem der Ansprüche 2 bis 9,
**dadurch gekennzeichnet, dass** das Kupplungsteil (2) in der Stirnwand (60) eine den Einsteckkanal (4) umschließende Auflagenut (80) zur Lagerung des Rückstellelements (54) ausgebildet hat, wobei das Rückstellelement (54) und die Auflagenut (80) derart korrespondierend zueinander ausgebildet sind, dass das Rückstellelement (54) gegen ein Verschieben senkrecht zur Einsteckrichtung (E) und gegen ein Rotieren um den Einsteckkanal (4) in der Auflagenut (80) gelagert ist.

11. Steckverbinder (1) nach einem der Ansprüche 1 bis 10,
**dadurch gekennzeichnet, dass** das Rückstellelement (54) aus Federstahl ausgebildet ist.

12. Steckverbinder (1) nach einem der Ansprüche 1 bis 11,
**dadurch gekennzeichnet, dass** das Kupplungsteil (2) zweiteilig, aus einem Grundkörper (8) und einem Aufnahmekörper (10), gebildet ist, welche reversibel oder irreversibel, insbesondere kraft- und/oder form- oder stoffschlüssig, miteinander verbindbar sind.

13. Steckverbinder (1) nach einem der Ansprüche 1 bis 12,
**dadurch gekennzeichnet, dass** das Kupplungsteil (2) oder der Aufnahmekörper (10) und/oder der Grundkörper (8) jeweils monolithisch im Spritzgussverfahren hergestellt ausgebildet sind.

## Claims

1. Connector (1) for providing hose and/or pipe connections, comprising a coupling part (2) which has an insertion channel (4) for a plug member (6) to be mounted in an insertion direction (E), further comprising a retaining part (28) which is arranged in a receiving opening (30) of the coupling part (2) and in a locking position can block the plug member (6) to be mounted against the insertion direction (E), wherein a restoring element (54) is arranged at least partially in the insertion channel (4) of the coupling part (2) and is designed in such a way that, in a mounted state with the plug part (6) fully inserted, a restoring force (F) can be exerted on the plug part (6) in the insertion direction (E), the restoring element (54) being deformable by the plug part (6) in an elastic range counter to the insertion direction (E), the restoring element (54) being supported directly axially and radially on the coupling part (2),
**characterized in that**
the coupling part (2), arranged in an inner wall (22) of the insertion channel (4), has formed at least one guiding groove (78) for guiding at least part of the restoring element (54), the guiding groove (78) being formed so as to be open at least on one side at the front of the coupling part (2) counter to the insertion direction (E) and extending in the insertion direction (E).

2. Connector (1) according to claim 1,
**characterized in that** the restoring element (54), as viewed in the insertion direction (E), is arranged at the front on an end wall (60) of the coupling part (2) and extends at least partially with an elastically deformable spring lug (62) in the insertion direction (E) into the insertion channel (4).

3. Connector (1) according to claim 2,
**characterized in that** a free end of the spring lug (62) arranged in the insertion channel (4) has a contact arm (64), which is integrally formed in particular at a first bending point (66), the contact arm (64) extending in the insertion direction (E) and enclosing a contact angle (α) in a range of greater than 0° to 90° with respect to a central flow axis (X) of the insertion channel (4), the contact arm (64) being designed to make contact with an annular collar (26) of the plug part (6).

4. Connector (1) according to claim 3,
**characterized in that** the spring lug (62) has a connecting arm (68) which extends from the contact arm (64), in particular from the first bending point (66), counter to the insertion direction (E) at an angle (β) to the central flow axis (X), in particular as far as a second bending point (70), the connecting arm (68) being angled in such a way that it encloses with the central flow axis (X) with an angle (β) a range of greater than 0° to 90°, so that the contact arm (64) and the connecting arm (68) are arranged in a V-shape with respect to one another.

5. Connector (1) according to claim 3 or 4,
**characterized in in that** the first bending point (66) of the spring lug (62) of the restoring element (54) on an undersurface (45) facing the plug part (6) perpendicularly to the flow axis (X) has a radius and/or the edges (46) of the lateral transitions of the spring lug (62) from the undersurface (45) facing the plug part (6) perpendicularly to the flow axis (X) to a lateral surface (47) of the spring lug (62) extending perpendicularly to the flow axis (X) are broken at least in the area of the first bending point (66).

6. Connector (1) according to one of claims 1 to 5,
**characterized in that** the restoring element (54) has at least one fastening lug (72) which points at least partially in the insertion direction (E) and is designed such that it can be hooked, latched or clipped into at least one rib (74) correspondingly arranged and formed on the outer circumference of the coupling part (2).

7. Connector (1) according to one of claims 1 to 6,
**characterized in that** the restoring element (54) is designed as a spring clip which annularly encloses the insertion channel (4) in such a way that the plug part (6) to be mounted can be inserted in the insertion direction (E) through a lead-through opening (76) of the spring clip into the insertion channel (4).

8. Connector (1) according to claim 7,
**characterized in that** the spring clip has two spring lugs (62) formed opposite the lead-through opening (76) and two fastening lugs (72) formed opposite the lead-through opening (76), whereby the spring lugs (62) and the fastening lugs (72) each being arranged offset from one another by 90° about the lead-through opening (76).

9. Connector (1) according to claim 8,
**characterized in that** the guiding groove (78) is formed for guiding the spring lug (62).

10. Connector (1) according to one of claims 2 to 9,
**characterized in that** the coupling part (2) has formed in the end wall (60) a bearing groove (80), which surrounds the insertion channel (4), for mounting the restoring element (54), the restoring element (54) and the bearing groove (80) being designed to correspond to one another in such a way that the restoring element (54) is mounted in the bearing groove (80) against displacement perpendicular to the insertion direction (E) and against rotation about the insertion channel (4).

11. Connector (1) according to one of claims 1 to 10,
**characterized in that** the restoring element (54) is made of spring steel.

12. Connector (1) according to one of claims 1 to 11,
**characterized in that** the coupling part (2) is formed in two parts, from a base element (8) and a receiving element (10), which can be connected to one another reversibly or irreversibly, in particular by frictional and/or form-fitting or positive substance jointing.

13. Connector (1) according to one of claims 1 to 12,
**characterized in that** the coupling part (2) or the receiving element (10) and/or the base element (8) are each monolithically injection molded.

## Revendications

1. Connecteur à insertion (1) pour réaliser des raccords de tuyaux et/ou de tubes, présentant une pièce de couplage (2) qui présente un conduit d'insertion (4) pour une partie d'insertion (6) à monter dans une direction d'insertion (E), présentant en outre une pièce de retenue (28) qui est disposée dans une ouverture de réception (30) de la pièce de couplage (2) et qui, dans une position de verrouillage, est apte à bloquer la partie d'insertion (6) à monter dans le sens opposé à la direction d'insertion (E), un élément de rappel (54) étant disposé au moins partiellement dans le conduit d'insertion (4) de la pièce de couplage (2) et étant conçu de telle sorte que, dans un état monté avec la partie d'insertion (6) complètement insérée, une force de rappel (F) est apte à être exercée sur la partie d'insertion (6) dans la direction d'insertion (E), l'élément de rappel (54) étant déformable dans une zone élastique à l'opposé de la direction d'insertion (E) par la partie d'insertion (6), l'élément de rappel (54) s'appuyant directement axialement et radialement sur la pièce de couplage (2),
**caractérisé en ce que** la pièce de couplage (2) présente au moins une rainure de guidage (78), aménagée dans une paroi intérieure (22) du conduit d'insertion (4), pour le guidage d'au moins une partie de l'élément de rappel (54), la rainure de guidage (78) étant réalisée de façon ouverte sur au moins un côté situé à l'opposé de la direction d'insertion (E) sur le côté frontal de la pièce de couplage (2) et s'étendant dans la direction d'insertion (E).

2. Connecteur à insertion (1) selon la revendication 1, **caractérisé en ce que** l'élément de rappel (54) est disposé, vu dans le direction d'insertion (E), sur le côté frontal d'une paroi frontal (60) de la pièce de couplage (2) et s'étend au moins partiellement avec une patte élastiquement déformable (62) dans le direction d'insertion (E) dans le conduit d'insertion (4).

3. Connecteur à insertion (1) selon la revendication 2, **caractérisé en ce qu'**une extrémité libre de la patte élastique (62) disposée dans le conduit d'insertion (4) présente un bras de contact (64) formé en particulier au niveau d'un premier point d'inflexion (66), le bras de contact (64) s'étendant dans la direction d'insertion (E) et formant avec un axe d'écoulement central (X) du conduit d'insertion (4) un angle de contact (α) compris entre plus de 0° et 90°, le bras de contact (64) étant conçu de façon à entrer en contact avec un collet annulaire (26) de la partie d'insertion (6).

4. Connecteur à insertion (1) selon la revendication 3, **caractérisé en ce que** la patte élastique (62) présente un bras de liaison (68) qui s'étend à partir du bras de contact (64), en particulier à partir du premier point d'inflexion (66), dans une direction opposée à la direction d'insertion (E) selon un angle (β) par rapport à l'axe d'écoulement central (X), en particulier jusqu'à un deuxième point d'inflexion (70), le bras de liaison (68) étant coudé de telle sorte qu'il forme avec l'axe d'écoulement central (X) un angle (β) compris entre plus de 0° et 90°, de sorte que le bras de contact (64) et le bras de liaison (68) sont disposés en forme de V l'un par rapport à l'autre.

5. Connecteur à insertion (1) selon la revendication 3 ou 4,
**caractérisé en ce que** le premier point d'inflexion (66) de la patte élastique (62) de l'élément de rappel (54) présente un rayon sur une surface inférieure (45) tournée vers la partie d'insertion (6) perpendiculairement à l'axe d'écoulement (X) et/ou **en ce que** les bords (46) des transitions latérales de la patte élastique (62) depuis la surface inférieure (45) tournée vers la partie d'insertion (6) perpendiculairement à l'axe d'écoulement (X) vers une surface latérale (47) de la languette élastique (62) s'étendant perpendiculairement à l'axe d'écoulement (X) sont rompues au moins au niveau du premier point d'inflexion (66).

6. Connecteur à insertion (1) selon l'une des revendications 1 à 5,
**caractérisé en ce que** l'élément de rappel (54) présente au moins une patte de fixation (72) orientée au moins partiellement dans le direction d'insertion (E), laquelle est conçue de manière à pouvoir être accrochée, encliquetée ou clipsée dans au moins une nervure (74) disposée et formée de manière correspondante sur le pourtour extérieur de la pièce de couplage (2).

7. Connecteur à insertion (1) selon l'une des revendications 1 à 6,
**caractérisé en ce que** l'élément de rappel (54) est réalisé sous la forme d'une bride à ressort qui entoure de manière annulaire le conduit d'insertion (4) de telle sorte que la partie d'insertion (6) à monter est apte à être introduite dans le conduit d'insertion (4) dans la direction d'insertion (E) à travers une ouverture de passage (76) de la bride à ressort.

8. Connecteur à insertion (1) selon la revendication 7, **caractérisé en ce que** la bride à ressort présente deux pattes élastiques (62) de part et d'autre de l'ouverture traversante (76) et deux pattes de fixation (72) situées de part et d'autre de l'ouverture traversante (76), les pattes élastiques (62) et les pattes de fixation (72) étant décalées les unes des autres de 90° autour de l'ouverture traversante (76).

9. Connecteur à insertion (1) selon la revendication 8, **caractérisé en ce que** la rainure de guidage (78) est conçue pour guider la patte élastique (62).

10. Connecteur à insertion (1) selon l'une des revendications 2 à 9,
**caractérisé en ce que** la pièce de couplage (2) a formé dans la paroi d'extrémité (60) une rainure d'appui (80) entourant le conduit d'insertion (4) pour le montage de l'élément de rappel (54), l'élément de rappel (54) et la rainure d'appui (80) étant formés de manière correspondante l'un par rapport à l'autre de telle sorte que l'élément de rappel (54) soit monté dans la rainure d'appui (80) à l'encontre d'un déplacement perpendiculaire au direction d'insertion (E) et à l'encontre d'une rotation autour du conduit d'insertion (4) .

11. Connecteur à insertion (1) selon l'une des revendications 1 à 10,
**caractérisé en ce que** l'élément de rappel (54) est réalisé en acier à ressort.

12. Connecteur à insertion (1) selon l'une des revendications 1 à 11,
**caractérisé en ce que** la pièce de couplage (2) est formée en deux parties, par un corps de base (8) et par un corps de réception (10), qui sont aptes à être reliés entre eux de manière réversible ou irréversible, en particulier par engagement en force et/ou par complémentarité de forme ou de matière.

13. Connecteur à insertion (1) selon l'une des revendications 1 à 12,
**caractérisé en ce que** la pièce de couplage (2) ou le corps de réception (10) et/ou le corps de base (8) sont chacun réalisés de manière monolithique par un procédé de moulage par injection.
